# DEMANDE DE BREVET EUROPEEN

(11) **EP 4 446 395 A1**
(43) Date de publication de la demande: **16.10.2024**
(21) Numéro de dépôt: 23167680.0
(22) Date de dépôt: 13.04.2023
(51) Int. Cl.: C09K 11/08, C09K 9/00, H05B 33/10, F21K 2/00, G04B 19/32

(54) **PROCÉDÉ DE FABRICATION D'UN ÉLÉMENT LUMINESCENT**

(71) Demandeur: Billight SA, 1242 Satigny (CH)
(72) Inventeur: Chatelain, René, CH - 1242 Satigny (CH); Leschot, Georges-André, décédé(e) (CH)
(74) Mandataire: Dennemeyer & Associates S.A.

(57) **Abrégé**

La présente invention se rapporte à un élément luminescent (1) destiné à être fixé à la surface d'un support et comprenant une dose de matière luminescente, ladite dose de matière luminescente comprenant une masse durcissable (50) de particules (41) luminescentes, lesdites particules étant noyées dans ladite masse durcissable, la masse durcie présentant une surface moulée (53) dans une loge (30) de forme prédéterminée.

## Description

### Domaine de l'invention

La présente description se rapporte au domaine du marquage par des moyens visibles dans l'obscurité et concerne plus particulièrement un élément luminescent, un procédé de fabrication d'un tel élément luminescent et un dispositif de mise en oeuvre d'un tel procédé de fabrication.

### Etat de la technique

Il est connu dans les domaines du marquage appliqué à l'horlogerie, à la bijouterie ou encore à la signalétique de sécurité de fournir des indications éclairées pour permettre le repérage d'objets et/ou la lecture d'indications inscrites sur ces objets dans des conditions de faible éclairage. Le marquage par des moyens visibles dans l'obscurité est nécessaire par exemple lorsque l'objet est dans un environnement nocturne ou dans l'eau à une profondeur importante.

Dans le domaine de l'horlogerie, certaines montres sont conçues pour éclairer ces indications et en faciliter la lecture au moyen d'éléments luminescents. Pour permettre cela, les fabricants appliquent typiquement une matière luminescente sur le cadrant ou les aiguilles de la montre. Dans le passé, les éléments luminescents des premières montres lumineuses étaient typiquement fabriqués au moyen de matériaux radioactifs comme le radium. Cependant, les risques de sécurité liés à la manipulation de tels matériaux étant élevés, l'utilisation du radium a progressivement été remplacée par celle du tritium, supposé non nocif pour la santé malgré sa faible radioactivité.

Dans ce but, il avait été proposé de disposer la matière radioactive dans une capsule transparente de montre, mise en place dans un dégagement prévu à cet effet. Dans ce but, la demande internationale WO 94/22062 A1 proposait la fabrication d'un élément radio luminescent, de fait radioactif, disposé sur une surface d'un appareil de mesure par exemple. Il était cependant indispensable que cet élément soit recouvert par une couche transparente, afin de protéger l'utilisateur de tout contact avec le composant radioactif contenu dans l'élément luminescent.

Alternative autrefois prometteuse aux pigments rémanents de radium, les dispositifs à base de tritium avaient l'avantage d'être auto-alimentés et de produire une luminosité constante qui ne s'estompe pas pendant la nuit. Cependant, les éléments radio luminescents à base de tritium sont aussi radioactifs et ont une demi-vie d'un peu plus de 12 ans. Cela signifie que l'intensité de la source lumineuse alimentée au tritium s'estompe progressivement, pour devenir généralement trop faible pour être utile après 20 à 30 ans. L'utilisation de tritium dans les montres a finalement été interdite en 1998, pour se voir remplacée par d'autres alternatives d'éléments luminescents plus sûrs et moins dangereux pour la santé.

La présente invention propose un élément luminescent de ce type, dont la fabrication est particulièrement simple, efficace et économique.

### Exposé de l'invention

Afin de répondre aux inconvénients précités, il est proposé selon un premier objet des présentes un élément luminescent destiné à être fixé à la surface d'un support et comprenant une dose de matière luminescente, ladite dose de matière luminescente comprenant une masse durcissable de particules luminescentes, lesdites particules étant noyées dans ladite masse durcissable, la masse durcie présentant une surface moulée dans une loge de forme prédéterminée.

Dans les présentes, une loge est similaire à une petite cavité et est aussi appelée « loge creuse » ; une masse durcissable peut désigner une masse destinée à durcir naturellement, une masse destinée à durcir sous l'action d'une cause extérieure ou une masse déjà durcie naturellement ou sous l'action d'une cause extérieure.

Dans une réalisation possible, la masse durcissable présente une surface qui est moulée dans une loge de forme prédéterminée, et optionnellement dans une variante, une surface libre lors du moulage, ladite surface libre étant destinée à être appliquée contre ledit support.

Dans une réalisation préférée, la masse durcissable est recouverte d'une couche de résine polymérisable pour former une capsule transparente entourant ladite masse durcissable.

Dans une réalisation préférée, la résine polymérisable est une résine photo-polymérisable.

Avantageusement, ceci permet de protéger l'élément luminescent afin de le fixer à la surface du support au moyen d'un encapsulage. Cet encapsulage améliore donc l'étanchéité et le caractère hermétique de la masse durcissable tout en le protégeant de dégâts, tels que des rayures.

Dans une variante de cette réalisation, la coupelle transparente est formée par application d'une colle, d'un adhésif, d'une résine polymérisée et/ou d'une résine thermodurcissable sur la surface libre.

Dans une réalisation, les particules luminescentes de la masse durcissable sont choisies parmi des particules photoluminescentes, en particulier des particules fluorescentes ou des particules phosphorescentes, des particules électroluminescentes, des particules chimiluminescentes, des particules bioluminescentes, des particules cathodoluminescentes, des particules radioluminescentes, des particules triboluminescentes, des particules sonoluminescentes et des particules thermoluminescentes.

Avantageusement, ceci permet de fournir un élément qui est luminescent en fonction d'une grande diversité de conditions environnementales d'utilisation. Des particules phosphorescentes, en particulier, permettent de fournir une luminescence de durée plus longue que des particules fluorescentes, tandis que des particules fluorescentes, en particulier, permettent de libérer plus d'énergie lumineuse que ce qui est permis par des particules phosphorescentes, et fournissent dont une intensité lumineuse plus grande.

Dans une réalisation, la masse durcissable est choisie parmi une poudre luminescente ou une céramique luminescente, ladite poudre luminescente ou ladite céramique luminescente comprenant un matériau choisi parmi de l'aluminate de strontium, de l'aluminate d'europium ou de l'aluminate de calcium.

Dans une réalisation possible, la masse durcissable est une céramique ou une poudre de nitrate de strontium.

Avantageusement, ceci permet de fournir une masse durcissable produisant un effet photoluminescent, par exemple phosphorescent ou fluorescent.

Dans une réalisation possible, l'aluminate du matériau choisi est un aluminate dopé au germanium, à l'europium et/ou au dysprosium.

Dans les présentes, par exemple, l'aluminate ainsi dopé est un aluminate de strontium, d'europium ou de calcium composant la poudre luminescente ou la céramique luminescente, et comprenant ainsi en outre au moins un métal alcalin ou un métal alcalino-terreux.

Avantageusement, ceci permet de fournir une masse lumineuse, et donc un élément luminescent, respectueuse/respectueux de l'environnement et brillant plus intensément et plus longtemps que les matériaux connus.

Par exemple, un dopage au germanium permet de considérablement améliorer l'effet de fluorescence de l'élément luminescent. L'élément luminescent peut ainsi être fixé à la surface de différents supports par exemple des montres, des cadrans, des instruments de mesure, des bijoux, des panneaux ou marquages de sécurité pouvant briller efficacement dans l'obscurité pendant une longue période. En outre, le processus d'activation et d'émission de lumière par un tel élément luminescent peut être répété autant de fois que souhaité car une telle masse durcissable ne souffre de quasiment aucun vieillissement.

De préférence, la masse durcissable comprend un polymère durcissant à la chaleur, à l'air et/ou aux ultra-violets. La résine pourrait également se polymériser par l'effet de l'humidité, par exemple de l'humidité de l'air.

Dans une réalisation préférée, la loge est partie constituante d'un film continu comportant une pluralité de loges de forme prédéterminée.

Dans les présentes, la forme prédéterminée de la loge creuse est au moins adaptée pour recevoir la matière luminescente, c'est-à-dire contenir celle-ci sans que celle-ci ne déborde en dehors de la loge creuse.

Avantageusement, la profondeur de la loge creuse peut être choisie ou contrainte au cours de la fabrication de l'élément luminescent.

Dans une réalisation préférée, l'élément luminescent comprend en outre une colle appliquée sur une surface libre de la masse durcissable et apte à assurer la fixation de l'élément luminescent sur ledit support.

Dans les présentes, la surface libre de la masse durcissable est par exemple obtenue lors du moulage de la loge creuse.

Dans une réalisation, la résine polymérisable est choisie parmi du silicone, une résine cyanoacrylate, une résine acrylique, un polyuréthane, un polycarbonate, un poly méthacrylate de méthyle acrylique, PMMA, un PMMA à froid et un PMMA à chaud. En variante, la résine est une résine bi-composant.

Dans une réalisation préférée, la résine polymérisable comprend un acrylate polyéther, un acrylate polyéther propoxylé ou du polyester acétate.

Avantageusement, une résine polymérisable, appelée dans le texte « fond blanc », permet de fournir un encapsulage étanche et protecteur de la masse durcissable. En outre, dans ce cas, la couleur, blanche ou pantone, permet de fournir un soutien optimal de la lumière réémise par l'élément luminescent, et la masse durcissable située sous le fond blanc.

Lorsque l'élément luminescent est formé avec une telle résine polymérisable et une masse durcissable dont un matériau est choisi parmi de l'aluminate de strontium, de l'aluminate d'europium ou de l'aluminate de calcium, la surface du support auquel est fixé cet élément luminescent est très avantageusement protégé contre les abrasions, les chocs thermiques, les dépôts de sel et, en règle générale, les dégâts liés à des conditions environnementales de plongée lorsque le support est un cadrant de montre adaptée pour aller sous l'eau. Dans tous les cas, et même si une telle montre ou un cadrant de montre est déjà étanche en lui-même, le fond blanc joue un rôle à la fois d'encapsuleur et de réflecteur de l'élément luminescent.

Par exemple, si la masse durcissable de l'élément luminescent est formée de pigments à base d'aluminate de strontium, une telle résine polymérisable le protège de contacts avec l'eau ou l'humidité, et évite de dégrader la qualité d'émission de lumière par l'élément luminescent.

Selon un autre objet des présentes, il est proposé un procédé de fabrication d'un élément luminescent destiné à être fixé à la surface d'un support, ledit procédé comprenant :
- une formation d'une loge creuse par matriçage dans une bande continue défilant pas-à-pas, et
- un placement, dans ladite loge creuse, d'un mélange comprenant une dose de matière luminescente, ladite dose de matière luminescente comprenant une masse durcissable de particules luminescentes, lesdites particules étant noyées dans ladite masse durcissable.

Dans une réalisation, le procédé comprend en outre le recouvrement de la masse durcissable par une couche de résine polymérisable pour former une capsule transparente entourant ladite masse durcissable dans la loge creuse.

Dans une réalisation préférée, le procédé comprend en outre un poinçonnage et/ou un chauffage de la bande continue avant le matriçage de la loge creuse.

Ceci permet un poinçonnage de la bande continue avant le matriçage, un chauffage de la bande continue avant le matriçage ou le poinçonnage lui-même, ou encore un poinçonnage effectué simultanément à un chauffage de la bande continue avant le matriçage. Par exemple, de telles étapes peuvent être effectuées en tant que poinçonnage/chauffage avec un poinçon chauffé à une température prédéterminée.

Dans une réalisation, le procédé comprend en outre, après le placement du mélange dans la loge creuse, un recouvrement de la masse durcissable par une couche de résine polymérisable pour former une capsule transparente entourant ladite masse durcissable.

Dans une réalisation, le procédé comprend en outre, après le placement du mélange dans la loge creuse et/ou après le recouvrement de la masse durcissable, un durcissement de la masse durcissable au moyen d'une augmentation de la température de la loge creuse et/ou d'une irradiation de la loge creuse au moyen d'un faisceau de rayons ultra-violets.

Dans une réalisation préférée, l'augmentation de la température et/ou l'irradiation se fait sous atmosphère contrôlée. L'augmentation de la température et/ou l'irradiation se fait en option par un procédé ondulatoire ou un procédé ultrasonique. Dans les présentes, une atmosphère contrôlée est définie par une température, une pression et une hygrométrie prédéterminées.

Dans une réalisation préférée, le faisceau de rayons ultra-violets utilisé pour irradier la loge creuse est choisi parmi un faisceau convergent et un faisceau divergent.

Avantageusement, un faisceau convergent permet de focaliser la majorité du rayonnement sur la loge creuse pour obtenir une polymérisation plus rapide et plus efficace de la masse durcissable et/ou de la résine polymérisable tandis qu'un faisceau divergent permet d'illuminer simultanément plusieurs loges creuses formées dans la bande continue ou une section entière de la bande continue pendant un laps de temps prédéterminé, et pour obtenir le même effet.

Avantageusement, un procédé ondulatoire ou un procédé ultrasonique permet d'améliorer la focalisation de la chauffe et d'augmenter son efficacité et sa rapidité.

Dans une variante, on peut utiliser un mélange comportant des particules luminescentes ayant une densité supérieure à celle de la masse durcissable.

Ceci permet d'obtenir une séparation des particules luminescentes et de la couche de résine polymérisable. Cette séparation est d'autant plus importante que la masse durcissable et la résine polymérisable précitées ont été polymérisés après un chauffage et/ou une illumination par un ou des faisceaux de rayons ultra-violets. Avantageusement, cette séparation produit une densité homogène au sein de la masse durcissable et de la résine polymérisable, ce qui améliore d'autant plus la diffraction et la luminescence de l'élément luminescent obtenu par le procédé.

Dans une réalisation, le procédé comprend en outre, après le placement du mélange dans la loge creuse et/ou après le recouvrement de la masse durcissable, un durcissement de la masse durcissable au moyen d'une augmentation de la température de la loge creuse et/ou d'une irradiation de la loge creuse au moyen d'un faisceau de rayons ultra-violets.

Dans une réalisation préférée, le procédé comprend en outre un scellage de la capsule transparente formée, une coupe de la bande continue pour extraire hors de la bande continue la capsule transparente scellée et/ou une coupe de la bande continue pour extraire hors de la bande continue la loge creuse dans laquelle est placé le mélange.

Dans une réalisation et avantageusement, une coupe de la bande continue à l'issue du procédé de fabrication permet d'obtenir directement soit la résine polymérisable seule, c'est-à-dire le fond blanc, soit la capsule transparente formée de la masse durcissable et de la résine polymérisable. Un scellage de la capsule transparente peut aussi être obtenu par ajout d'un mélange spécifique avec un film adapté à la polymérisation.

Selon encore un autre objet des présentes, il est proposé un dispositif de mise en oeuvre du procédé des réalisations mentionnées, ledit dispositif comprenant un système d'avance pas-à-pas de la bande continue, un poste de perforation de trous de reprise, un poste de matriçage des loges creuses, un premier poste d'illumination de la bande continue, un poste d'apport de résine polymérisable sur les loges creuses de la bande continue et un deuxième poste d'illumination de la bande continue.

Dans une réalisation préférée, l'avance de la bande continue est contrainte par les dimensions de la bande continue ou le type de matériau formant cette bande.

Dans une réalisation préférée, les postes d'illumination comprennent des émetteurs de chaleur, de faisceaux électromagnétiques et/ou des émetteurs de faisceaux ultra-violets convergents ou divergents.

### Description des figures

D'autres caractéristiques, détails et avantages apparaîtront à la lecture de la description détaillée ci-après, et à l'analyse des dessins annexés, sur lesquels :

La figure 1 est une vue schématique d'un dispositif de mise en oeuvre d'un procédé de fabrication d'éléments luminescents selon l'invention.

La figure 2 représente, vue de dessus, la bande continue dans laquelle sont réalisés ces éléments, à différents stades de leur fabrication.

La figure 3 est une représentation, en coupe, d'une matrice de formation de loges creuses, à une échelle fortement agrandie.

La figure 4 est une vue en coupe transversale de la bande, montrant une loge creuse obtenue avec l'outil de la figure 3 et remplie d'une masse durcissable comprenant des particules luminescentes.

La figure 5 est une vue en coupe transversale d'une capsule transparente formée dans la bande continue.

La figure 6 est une coupe d'une capsule transparente selon l'invention, disposée dans un dégagement correspondant pratiqué dans un support devant la recevoir.

La figure 7 est une représentation schématique en coupe d'un poste d'extraction d'un élément luminescent.

La figure 8 représente partiellement un segment découpé dans la bande continue et muni d'un élément luminescent en forme de chiffre et recouvert partiellement d'une colle ou d'un adhésif.

La figure 9 est une coupe longitudinale du segment de la figure 8 selon la ligne XIII-XIII.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description détaillée de l'invention

Les dessins et la description ci-après contiennent, pour l'essentiel, des éléments de caractère certain. Ils pourront donc servir à mieux faire comprendre la présente divulgation et à contribuer à sa définition, le cas échéant.

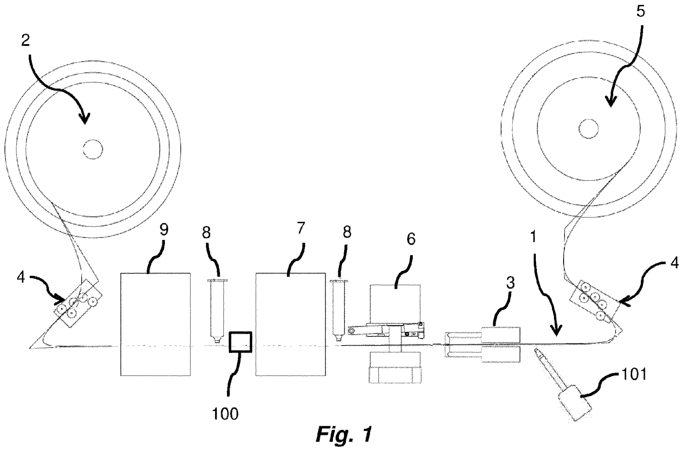

Il est maintenant fait référence à la figure 1, qui représente un dispositif de mise en oeuvre d'un procédé de fabrication d'éléments luminescents.

Le dispositif de fabrication en continu des éléments luminescents selon l'invention comporte, dans la vue schématique de la figure 1, une bande 1 disposée sur une bobine émettrice 2 et entraînée de manière connue par un premier moyen d'entraînement 4, par exemple un cabestan, une ou plusieurs roues d'entraînement ou encore un convoyeur. Ledit moyen d'entraînement peut comprendre des moyens d'accroche, par exemple des roues munies de tiges métalliques, adapté(e)s pour s'engager dans des trous de reprise 17 et 18 formés de chaque côté et sur la longueur de la bande continue 1.

Le premier moyen d'entraînement 4 permet de diriger la bande continue 1 directement dans un dispositif de mise en oeuvre du procédé de fabrication d'éléments luminescents. Pour faciliter l'enroulement de la bande continue 1 sur la bobine réceptrice 5, un deuxième moyen d'entraînement 4, par exemple similaire au premier moyen d'entraînement, est prévu entre le dernier poste du dispositif de traitement et la bobine réceptrice 5.

Les moyens d'entraînement 4 définissent ainsi un système d'avance pas-à-pas de la bande continue 1 dans le dispositif de mise en oeuvre du procédé de fabrication d'éléments luminescents, ce dispositif comprenant en outre un poste de perforation de trous de reprise 3 dans la bande continue, ces trous de reprise 3 étant par exemple adaptés pour coopérer avec les tiges métalliques munissant les roues des moyens d'accroche des moyens d'entraînement.

Le dispositif comprend en outre un poste de matriçage de loges creuses 6, un premier poste d'illumination 7 de la bande continue 1, un poste d'apport de résine polymérisable 8 sur les loges creuses 6 matricées de la bande continue 1 et/ou un deuxième poste d'illumination 9 de la bande continue 1. Après passage dans différents postes 3, 6, 8, 7, 8 et/ou 9 décrits ci-après et définissant un dispositif de traitement, la bande continue 1 est enroulée sur une bobine réceptrice 5. La bobine émettrice 2 et la bobine réceptrice peuvent faire partie ou non du dispositif de mise en oeuvre du procédé de fabrication d'éléments luminescents.

Ces éléments seront détaillés par la suite dans le cadre de la description d'au moins une mise en oeuvre d'un procédé de fabrication d'éléments luminescents.

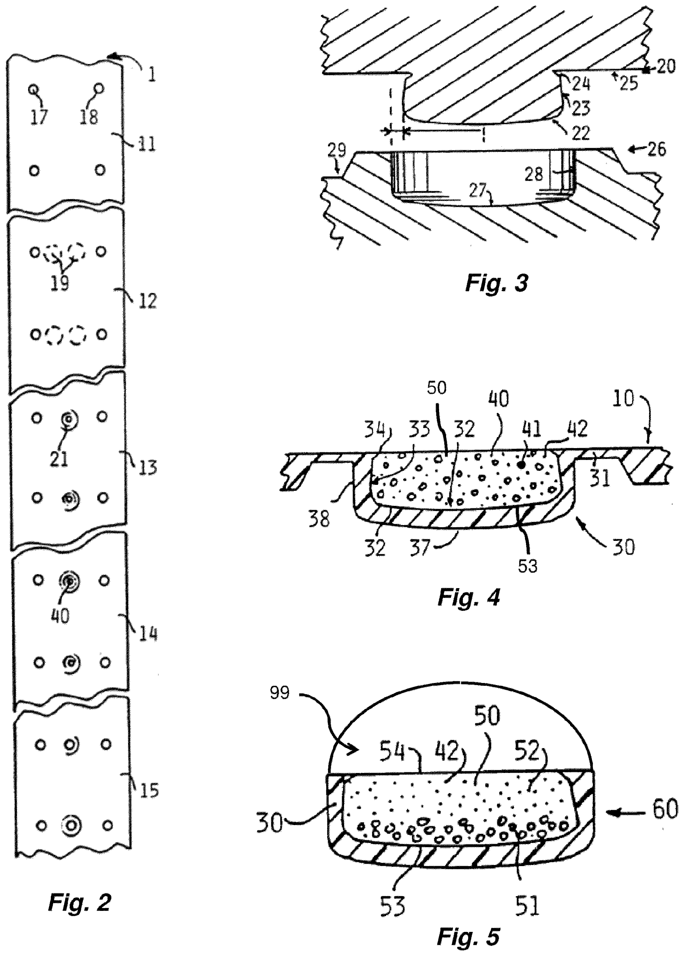

Il est maintenant fait référence à la figure 2, qui représente une vue de dessus de la bande continue dans laquelle sont fabriqués des éléments luminescents à différents stades d'un procédé de fabrication correspondant.

La figure 2 montre la bande 1 dans laquelle sont confectionnées les coupelles selon l'invention, cette bande étant représentée en secteurs successifs 11 à 15 représentants par exemple les stades successifs du procédé. Ces différents secteurs 11 à 15 seront décrits en détail plus loin. La bande 1 est par exemple en matière polyester ou toute autre matière transparente apte au matriçage.

Dans le secteur de bande 11, on a représenté deux séries de perforations 17 et 18, parallèles aux bords de la bande. Ces perforations latérales permettent de guider la bande dans une série successive de postes de traitement et d'en régler la course. Elles sont réalisées de manière conventionnelle et constituent des trous de reprise assurant le positionnement de la bande au cours de la fabrication et des étapes suivantes.

En variante, on peut prévoir de réaliser les perforations 17 et 18 en même temps que le matriçage 21, ces trous étant utilisés pour positionner la bande lors des opérations ultérieures, et notamment de découpage de la capsule transparente 60 ou d'extraction de l'élément luminescent 1.

Le secteur de bande 12 montre une possibilité facultative de chauffer la bande dans des zones 19, disposées de part et d'autre de l'axe central de la bande 1.

Cette disposition particulière permet d'assurer un apport de matière relativement souple à l'endroit où on se propose de former la loge creuse.

Le secteur de bande 13 montre l'emplacement du matriçage 21 pratiqué d'une manière qui sera détaillée par la suite pour réaliser la loge creuse 30 apte à recevoir une masse luminescente, en particulier une masse durcissable comprenant des particules luminescentes.

Le secteur de bande 14 figure l'introduction d'un mélange 40 comprenant une dose de matière luminescente luminescent 41 (ici non représenté) dans l'enceinte tandis que le secteur de bande 15 montre une bande après découpage des capsules transparentes 60 contenant la masse durcissable 50.

On a présenté jusqu'ici cinq secteurs de bandes correspondant à des stades de fabrication distincts, mais il est bien sûr possible de réaliser certains d'entre eux simultanément, sans sortir du cadre de la présente invention.

Il est maintenant fait référence à la figure 3, qui représente une matrice de formation de loges creuses.

Dans la coupe de la figure 3 on a représenté un poinçon 20, ce poinçon pouvant être chauffé ou non, et servant au matriçage 21 réalisé dans la bande 13. Ce poinçon 20 comporte plus précisément un fond arrondi 22, une partie tronconique 23 amenant à une gorge 24 en forme de V, dont le bord supérieur 25 est disposé dans un plan sensiblement perpendiculaire à l'axe de l'outil. La matrice 26 comporte une ouverture présentant un fond arrondi 27 prolongé vers le haut par une partie cylindrique 28. Un dégagement extérieur 29 est prévu pour le surplus de matière dégagé au cours du matriçage.

Dans la coupe de la figure 3 on a représenté le poinçon 20 servant au matriçage 21 réalisé dans la bande 13. Ce poinçon 20 comporte plus précisément un fond arrondi 22, une partie tronconique 23 amenant à une gorge 24 en forme de V, dont le bord supérieur 25 est disposé dans un plan sensiblement perpendiculaire à l'axe de l'outil. La matrice 26 comporte une ouverture présentant un fond arrondi 27 prolongé vers le haut par une partie cylindrique 28. Un dégagement extérieur 29 est prévu pour le surplus de matière dégagé au cours du matriçage.

Il est maintenant fait référence à la figure 4, qui représente une vue en coupe transversale de la bande continue avec une loge creuse obtenue avec l'outil de la figure 3 et remplie d'une masse durcissable comprenant des particules luminescentes.

Cette loge creuse présente intérieurement un fond arrondi 32, une paroi tronconique 33 et une lèvre intérieure 34 délimitant une ouverture 35. Extérieurement, la loge creuse offre une surface convexe 37 prolongée par un bord cylindrique 38. La paroi mince 31 de la bande continue 10 est destinée soit à être découpée par la suite, soit à donner la souplesse à la bande pour extraire la masse durcie contenant l'élément luminescent.

Comme illustré, le mélange 40 comprenant une dose de matière luminescente est introduit dans la loge creuse sur le secteur de bande 14 décrit précédemment. Ce mélange comprend par exemple du sulfate de zinc auquel a été ajouté des particules luminescentes et introduit dans une colle polymère apte à durcir à la chaleur ou sous rayonnement ultraviolet.

Les constituants de ce mélange sont tels que les particules luminescentes, représentées par des corps 41, tombent par sédimentation au fond de l'enceinte de sorte que seule la résine polymérisable, schématisée par des points 42, subsiste au niveau de l'ouverture de l'enceinte.

Dans un autre exemple, la masse durcissable est une poudre luminescente et est par exemple de l'aluminate de strontium, ce qui permet de fournir un effet de luminescence supérieur à ce qui peut être obtenu avec des particules fluorescentes.

Il est maintenant fait référence à la figure 5, qui représente une vue en coupe transversale d'une capsule transparente formée dans la bande continue.

En particulier, est représentée une capsule transparente 60 telle qu'elle est formée après matriçage individuel (ou durcissage de la masse 50) et/ou découpage de la capsule transparente 60 hors de la bande 15. On notera que les particules luminescentes 41 peuvent former une couche 51 située derrière la surface convexe 37 tandis que les particules 42 de résine constituent, après durcissement, une masse de protection 52 fournissant un encapsulage hermétique de la couche 51. On notera encore que selon différentes variantes, la masse durcie 50 peut présenter différentes surfaces, notamment une surface moulée 53 et une surface libre 54.

Dans le cas présent, après son placement dans la loge creuse et après traitement par exemple par un moyen de chauffage, la masse durcissable initiale comprend alors partiellement une masse durcie 50 où se retrouve la masse de protection 52.

On peut ainsi former une capsule transparente avec une loge creuse recouverte d'une résine polymérisable, ou fond blanc, encapsulant dans la loge creuse une masse durcissable produisant un effet photoluminescent, notamment si le matériau qu'elle comprend et choisi parmi de l'aluminate de strontium, de l'aluminate d'europium ou de l'aluminate de calcium, optionnellement dopé aux terres rares. Le fond blanc soutient d'autant mieux l'effet photoluminescent du fait de la masse durcissable située sous le fond blanc.

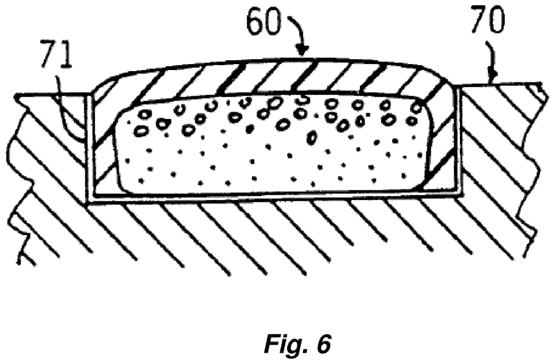

Il est maintenant fait référence à la figure 6, qui représente une coupe d'une capsule transparente selon l'invention, disposée dans un dégagement correspondant pratiqué dans un support devant la recevoir.

En particulier, est représenté la mise en place d'une capsule transparente 60 selon l'invention. Lors du procédé de fabrication, la capsule transparente 60 est fixée par tout moyen connu dans la surface d'un support 70, par exemple dans un dégagement 71 de forme correspondante pratiqué dans le support 70. A titre d'exemple, ce support 70 est la lunette d'une pièce d'horlogerie.

Dans l'exemple donné ici, la capsule transparente insérée présente la forme d'une pastille arrondie, mais il est bien sûr possible de prévoir d'autres formes géométriques. On pourra ainsi réaliser des enceintes de formes diverses représentant, à titre d'exemples, des chiffres, des lettres ou d'autres symboles comme des marques de fabriques, des repères, etc.

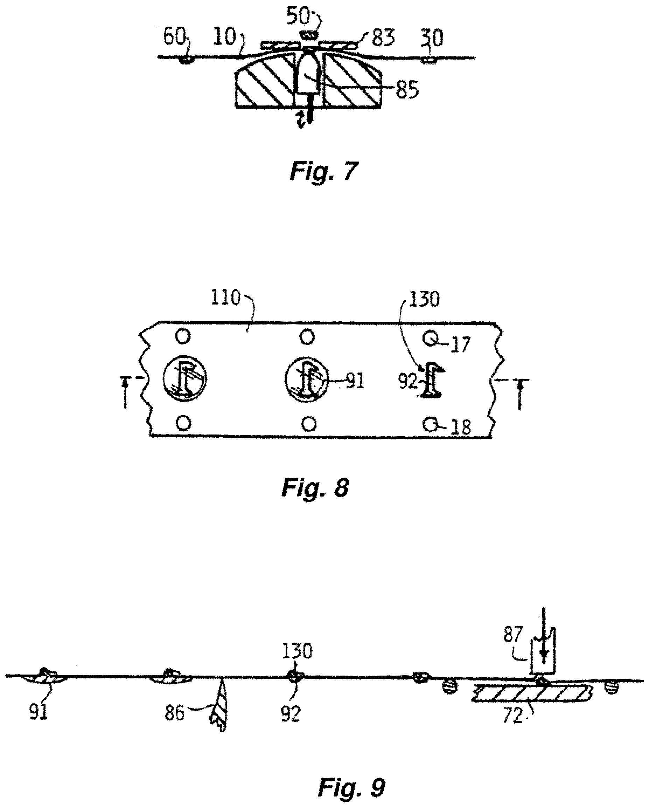

Il est maintenant fait référence à la figure 7, qui représente schématiquement une coupe d'un poste d'extraction d'un élément luminescent.

Ce poste d'extraction peut utiliser un outil 84 tel que celui schématisé. On a représenté sur la gauche de l'outil une capsule transparente 60 solidaire de la bande 10 qui avance vers la droite pas-à-pas. Un poussoir 85 permet de projeter la masse durcissable 50 vers le haut alors que la loge creuse de réception 30 reste solidaire de la bande.

La masse durcie ainsi libérée sera mise en place avec des brucelles et/ou par un robot préhenseur ou toute autres techniques de placement.

Toutes les formes d'exécution décrites jusqu'ici concernent un élément luminescent ayant forme circulaire. Il est maintenant fait référence à la figure 8, qui représente un segment découpé dans la bande continue et muni d'un élément luminescent en forme de chiffre et recouvert partiellement d'une colle ou d'un adhésif. Il est aussi fait référence à la figure 9, qui représente une coupe longitudinale de la figure 8 selon la ligne XIII-XIII.

Il va de soi que l'on peut avantageusement prévoir des outils permettant de former, dans la bande, un dégagement en forme de chiffre, de lettre ou d'un symbole particulier. C'est ainsi que l'on a représenté une bande 110, munie de trous de reprise 17 et 18 et dans laquelle la loge creuse de réception 130 est constituée par un moule apte à donner un chiffre un dans lequel on dispose, comme précédemment, un mélange luminescent 40 pour obtenir une masse durcissable 150.

On a en outre représenté une variante dans laquelle on applique sur la surface libre du mélange luminescent un adhésif 90, qui permet ultérieurement la fixation de la masse durcie sur son support. Cette manière de faire est particulièrement intéressante lorsque la forme de l'élément luminescent est compliquée et que par conséquent la masse durcie est délicate.

Dans une réalisation, la bande 130 comprend par exemple un film thermoformable sur lequel la colle ne tient pas, par exemple un polyester traité au silicone, ou un film Teflon FEP. On peut appliquer un adhésif ou une colle goutte à goutte sur le moulage, ce qui crée une zone 91 d'adhésif ou de colle. Si la bande 130 refuse la colle, il est aisé de retirer avec une raclette l'adhésif 91 appliqué en dehors de la forme du moulage, de sorte que seule la surface 92 reste encollée. Celle-ci est de préférence appliquée sur le support destiné à la recevoir au moyen d'une presse 87.

Pour l'obtention des éléments luminescents selon l'invention, on a mis au point un procédé de fabrication comportant différentes étapes, dont certaines permettent des améliorations mais ne sont pas forcément nécessaires.

C'est ainsi qu'après la perforation des trous de reprise 17 et 18, il est intéressant de préchauffer la bande, bien que cela ne soit pas toujours nécessaire selon la matière utilisée, par exemple lorsque la bande continue 1 est formée de polyester. Si l'on propose de chauffer la bande en-dehors de l'axe central, c'est pour éviter un retrait de la matière à l'endroit où le matriçage 21 sera effectué. Pour faciliter cette opération, le poinçon est monté en température, entre environ 200 et 300 °C, tandis que la matrice est froide. Ceci permet d'une part d'améliorer la finition de la matrice au cours de la formation de loges creuses et optionnellement de former la lèvre intérieure 34, qui présente alors aussi une souplesse améliorée pour permettre le retrait du poinçon 20.

En variante, il est prévu de pouvoir réaliser les perforations 17 et 18 en même temps que le matriçage 21, ces trous étant utilisés pour positionner la bande lors des opérations ultérieures, et notamment de découpage de la capsule transparente 60 ou d'extraction de l'élément luminescent 1.

En outre la polymérisation de la résine 52 est accélérée par un traitement aux rayons ultra-violets.

Selon des exemples particuliers du procédé, on réalisera des opérations telles que l'encollage et la pose des symboles adhésifs des figures 8 et 9.

Dans le schéma de principe de dispositif de la figure 1, outre la bobine émettrice 2, la bobine réceptrice 4 et le système 4 d'avance pas-à-pas de la bande continue 1 entre ces deux bobines et de la droite vers la gauche sur ce schéma. Sur ce schéma, on a représenté un nombre particulier de postes de traitement 3, 6, 8, 7, 8 et 9, mais il va de soi que l'on utilisera autant de postes correspondants que souhaités pour pouvoir mettre en oeuvre les étapes successives définissant le procédé selon l'invention. En particulier, deux postes semblables 8 sont présents.

Selon une première variante non représentée, le dispositif peut être séparé en deux parties distinctes de sorte que dans la première partie, après son passage, de la droite vers la gauche, au travers des postes 3, 6 et 7 en sortie du premier poste d'illumination 7 de la bande continue 1, la bande continue 1 est enroulée sur une bobine intermédiaire (non représentée) avec un moyen d'entraînement 4 (non représenté). Dans la deuxième partie, séparée de la première partie par un élément 100 optionnel, qui est par exemple ladite bobine intermédiaire, la bande continue 1 traitée par la première partie du dispositif est ensuite déroulée séparément depuis cette bobine intermédiaire pour être dirigée par un autre moyen d'entraînement dans un poste d'apport de résine polymérisable 8, un deuxième poste d'illumination 9 de la bande continue 1 et, enfin, un dernier moyen d'entraînement pour enrouler la bande continue 1 traitée sur la bobine réceptrice 2. La bande continue traverse ainsi consécutivement une première partie du dispositif au travers d'un poste de perforation de trous de reprise 3, d'un poste de matriçage de loges creuses 6, d'un premier poste d'illumination 7 pour être enroulée sur la bobine intermédiaire définissant l'élément 100. Optionnellement traitée entre les deux parties, la bobine intermédiaire est ensuite déplacée par un opérateur ou un robot en entrée de la deuxième partie, de sorte que la bande continue est déroulée depuis la bobine intermédiaire vers la bobine réceptrice 2 par des moyens d'entraînement, traversant consécutivement un poste d'apport de résine polymérisable 8 sur les loges creuses 6, un deuxième poste d'illumination 9 de la bande continue 1. Cette séparation en deux parties permet d'effectuer des étapes de contrôle et de vérification de la bande entre les deux parties.

Selon une deuxième variante qui est celle représentée sur la figure 1, l'élément 100 est absent de sorte que la bande continue 1 est avancée pas-à-pas par les moyens d'entraînement directement depuis la bobine émettrice 5 jusqu'à la bobine réceptrice 2 en étant traitée par plusieurs postes consécutifs au cours de sa course entre les deux bobines, ces postes consécutifs comprenant et dans cet ordre un poste de perforation de trous de reprise 3, un poste de matriçage de loges creuses 6, un premier poste d'apport de résine polymérisable 8, un premier poste d'illumination 7 de la bande continue 1, un deuxième poste d'apport de résine polymérisable 8 sur les loges creuses 6 de la bande continue 1 et un deuxième poste d'illumination 9 de la bande continue 1.

La description qui suit s'appliquant autant à la première variante qu'à la deuxième variante.

Dans un premier temps, la bande 1 est alimentée depuis la bobine émettrice 5 par les moyens d'entraînement 4 vers le poste de perforation de trous de reprise 3. Ce poste de perforation comprend par exemple un poinçon adapté pour réaliser une seule série de perforation ou deux séries de perforations 17 et 18 parallèles aux bords de la bande 1.

Dans un deuxième temps, en option, avant ou après le passage de la bande 1 dans le poste de perforations de trous de reprise 3, une activation du matériau formant la bande continue 1 peut être mis en oeuvre au moyen d'au moins d'un moyen de chauffage 101. Cet au moins un moyen de chauffage est disposé de sorte à pouvoir traiter la bande continue au cours de son avance pas-à-pas.

Selon une réalisation préférée, le dispositif comprend au moins un tel moyen de chauffage 101, ledit moyen de chauffage 101 comprenant un dispositif de traitement de surface telle qu'une torche, de préférence une torche plasma atmosphérique. Cette torche est choisie de sorte à pouvoir mettre en oeuvre un traitement par plasma ou effet Corona de la bande continue.

Lorsqu'un moyen de chauffage 101 est disposé après le poste de matriçage des loges creuses 6 dans le sens de l'avance pas-à-pas de la bande continue depuis la bobine émettrice 5 vers la bobine réceptrice 2 (non représenté), cette torche permet d'appliquer un traitement par plasma ou par effet Corona à la masse durcissable des loges creuses.

Lorsqu'un moyen de chauffage 101 est disposé après le deuxième poste d'apport de résine polymérisable 8 sur les loges creuses 6 de la bande continue 1 dans le sens de l'avance pas-à-pas de la bande continue depuis la bobine émettrice 5 vers la bobine réceptrice 2 (non représenté), cette au moins une torche permet d'appliquer un traitement par plasma ou par effet Corona à la résine polymérisable des loges creuses.

Avantageusement et de manière surprenante, ce moyen de chauffage 101 fournit une activation grandement améliorée de la bande continue 1 avant ou après formation des loges creuses.

En particulier, il a été constaté qu'une telle activation améliorait fortement l'adhésion de fluides en vue d'une fixation et, dans le cas de torches à effet Corona, de soumettre la bande continue 1 et/ou les loges creuses à des jets d'air permettant de nettoyer la loge creuse contenant (ou non) la masse durcissable.

De plus, lorsque la masse durcissable comprend un matériau choisi parmi de l'aluminate de strontium, de l'aluminate d'europium ou de l'aluminate de calcium, l'utilisation du moyen de chauffage 101 et en particulier d'une torche à plasma ou à effet Corona facilitait l'adhésion de la résine polymérisable et de la masse durcissable, et notamment lorsque la masse durcissable comprend un matériau choisi parmi de l'aluminate de strontium, de l'aluminate d'europium ou de l'aluminate de calcium.

Aussi, avec une torche plasma ou à effet Corona comme moyen de chauffage 101, on obtient une ionisation facilitant l' activation de la résine polymérisable après l'un des postes d' apport de résine polymérisable. Ceci permet également de faciliter une découpe ultérieure de la bande continue, puisqu'il a été constaté de manière surprenante que les efforts de coupe, par exemple dus à des effets de cisaillement, étaient considérablement réduits en fin de production, réduisant de ce fait le nombre de rebuts formés lors d'une fabrication en continu d'éléments luminescents.

Dans un troisième temps, la bande 1 est acheminée vers le poste de matriçage de loges creuses 6 pour former une bande matricée, c'est-à-dire former une suite de loges creuses dans la bande 1 au cours de son avance pas-à-pas.

Ce matriçage, c'est-à-dire la formation des loges creuses, comprend un chauffage, optionnellement précédé d'un préchauffage comme décrit en lien avec le moyen de chauffage 101, de la bande 1 avec au moins un corps de chauffe. De préférence, ce chauffage est mis en oeuvre avec deux corps de chauffe, l'un étant situé au-dessus de la bande et l'autre en-dessous de la bande, les surfaces des deux corps de chauffe étant de préférence parallèles entre elles au cours de l'avancement pas-à-pas de la bande 1.

Deux tels corps de chauffe sont par exemple deux fers chauffés d'une même cartouche chauffante, disposée pour permettre un matriçage régulier de la bande 1 à l'aide d'un alignement de ces deux fers de chauffe.

Il est aussi prévu de pouvoir régler et aligner les deux fers de chauffe en fonction de six degrés de liberté, dont les déplacements possibles le long de trois axes de translation possibles et les translations possibles autour de trois axes de rotation possibles de la position de la bande avançant pas-à-pas. Dans ce cas, les deux corps de chauffe peuvent cependant présenter un désalignement prédéterminé de sorte à pouvoir former, lors du matriçage, un décolleté sur un côté de la loge creuse formée, en modifiant la position du point chaud obtenu par les deux corps de chauffe.

Ceci permet de former une loge creuse dans la bande 1, et par répétition plusieurs loges creuses lors de chaque pas d'avance de la bande 1, en approchant temporairement le ou les corps de chauffe de la bande 1, donc l'avance est arrêtée temporairement au cours d'un pas de la bande 1 dans le poste de matriçage 6. Le ou les corps de chauffe ne touchent pas la bande 1 au cours de cette procédure afin de ne pas l'endommager.

La formation de chaque loge creuse est effectuée avec une fréquence prédéterminée, fonction d'un temps d'ouverture et d'un temps de pression donnés. Les dimensions de la loge creuse formée et sa position dans la bande dépendent ainsi des six degrés de liberté précités, du temps de pression, de la température de chauffe, par exemple 250 °C à 300 °C pour une température effective de 200 °C, de la pression ambiante, par exemple 1 atmosphère, ainsi que de la distance séparant les deux fers chauds. Les autres paramètres étant prédéfinis, la formation de la loge creuse peut être commandée très simplement de manière analogique en fonction de la température de chauffe seule.

Après la formation de la loge creuse, le poste de matriçage 6 place dans ladite loge creuse, un mélange 40 d'une dose de matière luminescente. Ladite dose de matière luminescente comprend la masse durcissable 50 de particules luminescentes noyées dans cette masse durcissable.

Dans une réalisation préférée particulière, le poste de matriçage 6 applique dans la loge creuse une poudre et/ou une céramique luminescente comprenant un aluminate générant un effet photoluminescent, par exemple de l'aluminate de strontium, de l'aluminate d'europium ou de l'aluminate de calcium.

Ce placement ou cette application de la dose de matière luminescente se fait de préférence au sein du premier poste d'apport de résine polymérisable 8 situé alors après le poste de matriçage 6. Ce placement ou cette application de la dose se fait ainsi avec une seringue pulsée, la fréquence de fonctionnement de cette seringue étant synchronisée avec l'avancement de la bande 1 pas-à-pas, et ce afin de placer très précisément la masse durcissable dans chacune des loges creuses, et en particulier, de remplir chaque loge creuse avec la poudre et/ou la céramique luminescente précitée(s) sans débordement.

Dans une réalisation possible, la viscosité de cette seringue pulsée est conditionnée par la pression et la température de l'environnement du dispositif et/ou d'un poste particulier du dispositif. Cette viscosité définit donc un paramètre pouvant lui-même synchroniser ou servir à définir la vitesse d'avance pas-à-pas de la bande 1 dans le dispositif.

Dans un quatrième temps, la bande 1 est acheminée vers un premier poste d'illumination 7 formé par un bloc fermé et comprenant une lumière permettant d'éclairer la bande 1 au cours de son avance.

En particulier, la lumière du premier poste d'illumination 7 est une lampe divergente, comprenant de préférence une lampe à mercure ou une pluralité de diodes électroluminescente, ce qui permet avantageusement de mettre en oeuvre une fixation et/ou une polymérisation plus rapide, plus efficace et plus uniforme de la dose de matière luminescente dans la loge creuse.

Dans un cinquième temps optionnel, la bande 1 peut faire l'office d'un traitement intermédiaire via l'élément 100 optionnel, comprenant par exemple un enroulement sur une bobine intermédiaire (non représentée) avec un moyen d'entraînement 4 (non représenté), comme décrit précédemment.

Dans un sixième temps, la bande 1 est acheminée vers le poste d'apport de résine polymérisable 8 sur les loges creuses 6 de la bande continue 1.

Comme illustré, le poste d'apport de résine polymérisable 8 comprend de préférence une seringue, par exemple une autre seringue pulsée, configurée pour déposer la résine polymérisable sur le sommet de la loge creuse contenant la dose de matière luminescente, qui est typiquement à ce stade déjà totalement ou partiellement durcie.

Dans une réalisation préférée, l'avance pas-à-pas de la bande continue 1 est régulé en fonction des paramètres des poste de perforation de trous de reprise 3, poste de matriçage des loges creuses 6, premier poste d'illumination 7, poste d'apport de résine polymérisable 8 et/ou deuxième poste d'illumination 9 de la bande continue 1. Par exemple, le piston de la seringue du poste d'apport de résine polymérisable 8 peut avoir une fréquence adaptée pour réguler la vitesse de course de la bande 1 dans le dispositif, notamment pour synchroniser l'ajout de résine polymérisable sur la bande 1 avec la formation des loges creuses au niveau du poste perforations 3 et/ou du poste de matriçage 6.

En règle générale, la résine polymérisable et la dose de matière luminescente ont des taux de polymérisation différents. En partie pour cette raison, et dans un septième temps, la bande 1 est acheminée vers un deuxième poste d'illumination 9 formé par un autre bloc fermé et comprenant une lumière permettant d'éclairer la bande 1 au cours de son avance.

En particulier, la lumière du deuxième poste d'illumination 9 est une lampe convergente, comprenant de préférence une lampe à mercure, une diode électroluminescente et/ou une diode laser, ce qui permet avantageusement de mettre en oeuvre une fixation et/ou une polymérisation plus rapide, plus efficace et plus localisée de la résine polymérisable sur la loge creuse.

Dans un huitième temps, la bande continue 1 est enroulée sur la bobine réceptrice 2 pour un traitement ultérieur. Avant cet enroulement ou lors de celui-ci, les loges creuses ou les capsules transparentes peuvent être scellées à l'aide de moyens connus.

Dans une réalisation, dans un neuvième temps, un ou plusieurs des éléments luminescents voire uniquement les fonds blancs correspondants, sont extraits de la bande au moyen d'une coupe de la bande continue 1. Ceci permet d'extraire hors de la bande continue la capsule transparente scellée et/ou la loge creuse dans laquelle est placé le mélange.

Dans une réalisation possible, au moins un capteur optique ou un moyen de contrôle visuel est disposé après le poste de perforation 3, le poste de matriçage 6, le premier poste d'illumination 7, le poste d'apport de résine polymérisable 8 et/ou le deuxième poste d'illumination 9 afin de vérifier la fabrication. En particulier, ceci permet un contrôle visuel automatisé après chaque seringue ou à la sortie du dispositif pour vérifier les dimensions et la forme de l'élément luminescent ou du fond blanc formé. Il est par exemple possible de contrôler de manière automatisée qu'une loge creuse n'a pas été remplie avec pas trop de masse durcissable ou n'a pas été recouverte de trop de résine polymérisable.

## Revendications

1. Elément luminescent (1) destiné à être fixé à la surface d'un support (70) et comprenant une dose de matière luminescente, ladite dose de matière luminescente comprenant une masse durcissable (50) de particules (41) luminescentes, lesdites particules étant noyées dans ladite masse durcissable, la masse durcie présentant une surface moulée (53) dans une loge (30) de forme prédéterminée.

2. Elément luminescent selon la revendication 1, **caractérisé en ce que** la masse durcissable est recouverte d'une couche de résine polymérisable pour former une capsule transparente (60) entourant ladite masse durcissable.

3. Elément luminescent selon la revendication 1 ou 2, **caractérisé en ce que** les particules luminescentes de la masse durcissable sont choisies parmi des particules photoluminescentes, en particulier des particules fluorescentes ou des particules phosphorescentes, des particules électroluminescentes, des particules chimiluminescentes, des particules bioluminescentes, des particules cathodoluminescentes, des particules radioluminescentes, des particules triboluminescentes, des particules sonoluminescentes et des particules thermoluminescentes.

4. Elément luminescent selon la revendication 3, **caractérisé en ce que** la masse durcissable est choisie parmi est choisie parmi une poudre luminescente ou une céramique luminescente, ladite poudre luminescente ou ladite céramique luminescente comprenant un matériau choisi parmi de l'aluminate de strontium, de l'aluminate d'europium ou de l'aluminate de calcium.

5. Elément luminescent selon l'une quelconque des revendications précédentes, **caractérisé en ce que** la loge (30) est partie constituante d'un film continu (10) comportant une pluralité de loges (30) de forme prédéterminée.

6. Elément luminescent selon l'une quelconque des revendications précédentes, **caractérisé en ce que** l'élément luminescent comprend en outre une colle (92) appliquée sur une surface libre (54) de la masse durcissable et apte à assurer la fixation de l'élément luminescent sur ledit support (70).

7. Elément luminescent selon l'une quelconque des revendications 2 à 6, **caractérisé en ce que** la résine polymérisable est choisie parmi du silicone, une résine cyanoacrylate, une résine acrylique, un polyuréthane, un polycarbonate, un poly méthacrylate de méthyle acrylique, PMMA, un PMMA à froid et un PMMA à chaud.

8. Procédé de fabrication d'un élément luminescent destiné à être fixé à la surface d'un support, **caractérisé en ce que** ledit procédé comprend :
- une formation d'une loge creuse (30) par matriçage dans une bande continue (1 ;10 ;110 ; 11 à 15) défilant pas-à-pas, et
- un placement, dans ladite loge creuse, d'un mélange (40) comprenant une dose de matière luminescente (41), ladite dose de matière luminescente comprenant une masse durcissable (50) de particules (41) luminescentes, lesdites particules étant noyées dans ladite masse durcissable.

9. Procédé de fabrication d'un élément luminescent selon la revendication 8, **caractérisé en ce que** le procédé comprend en outre le recouvrement de la masse durcissable par une couche de résine polymérisable pour former une capsule transparente (60) entourant ladite masse durcissable dans la loge creuse.

10. Procédé de fabrication d'un élément luminescent selon la revendication 8 ou 9, **caractérisé en ce que** le procédé comprend en outre un poinçonnage et/ou un chauffage de la bande continue avant le matriçage de la loge creuse.

11. Procédé de fabrication d'un élément luminescent selon l'une quelconque des revendications 8 à 10, **caractérisé en ce que** le procédé comprend en outre, après le placement du mélange dans la loge creuse, un recouvrement de la masse durcissable par une couche de résine polymérisable pour former une capsule transparente (60) entourant ladite masse durcissable.

12. Procédé de fabrication d'un élément luminescent selon l'une quelconque des revendications 9 à 11, **caractérisé en ce que** le procédé comprend en outre, après le placement du mélange dans la loge creuse et/ou après le recouvrement de la masse durcissable, un durcissement de la masse durcissable au moyen d'une augmentation de la température de la loge creuse et/ou d'une irradiation de la loge creuse au moyen d'un faisceau de rayons ultra-violets.

13. Procédé de fabrication d'un élément luminescent selon l'une quelconque des revendications 9 à 11, **caractérisé en ce que** le procédé comprend en outre, après le placement du mélange dans la loge creuse et/ou après le recouvrement de la masse durcissable, un durcissement de la masse durcissable au moyen d'une augmentation de la température de la loge creuse et/ou d'une irradiation de la loge creuse au moyen d'un faisceau de rayons ultra-violets.

14. Procédé de fabrication d'un élément luminescent selon l'une quelconque des revendications 11 à 13, **caractérisé en ce que** le procédé comprend en outre un scellage de la capsule transparente formée, une coupe de la bande continue pour extraire hors de la bande continue la capsule transparente scellée et/ou une coupe de la bande continue pour extraire hors de la bande continue la loge creuse dans laquelle est placé le mélange.

15. Dispositif de mise en oeuvre du procédé selon l'une des revendications 8 à 14, **caractérisé en ce que** ledit dispositif comprend un système (4) d'avance pas-à-pas de la bande continue (1), un poste de perforation de trous de reprise (3), un poste de matriçage des loges creuses (6), un premier poste d'illumination (7) de la bande continue (1), un poste d'apport de résine polymérisable (8) sur les loges creuses (6) de la bande continue (1) et un deuxième poste d'illumination (9) de la bande continue (1).
